# EUROPÄISCHE PATENTANMELDUNG

(11) **EP 1 538 026 A1**
(43) Veröffentlichungstag der Anmeldung: **08.06.2005**
(21) Anmeldenummer: 03029334.4
(22) Anmeldetag: 19.12.2003
(51) Int. Cl.: B60R 7/02

(54) **Haltevorrichtung für Gegenstände in einem Laderaum eines Kraftfahrzeuges**

(30) Priorität: 04.12.2003 DE 10356545
(71) Anmelder: VOTEX GmbH, D-63303 Dreieich (DE)
(72) Erfinder: Breitenbach, Simon, 63925 Laudenbach (DE); Wolff-Marting, Hans-Joachim, 65510 Idstein (DE)
(74) Vertreter: Liebl, Thomas, Dipl.-Ing.

(57) **Zusammenfassung**

Die Erfindung betrifft eine Haltevorrichtung (1) für Gegenstände in einem Laderaum (2) eines Kraftfahrzeuges mit einem ortsfest im Laderaum (2) angeordneten Montageteil (6) und einem Halteteil (7), das zwischen einer Halteteil-Nichtgebrauchsstellung und wenigstens einer Halteteil-Gebrauchsstellung verlagerbar ist. Erfindungsgemäß ist das Halteteil (7) in der Halteteil-Nichtgebrauchsstellung wenigstens bereichsweise direkt benachbart zum Montageteil (6) anordenbar. In der Halteteil-Gebrauchsstellung ist das Halteteil (7) beabstandet zum Montageteil (6) anordenbar. Zwischen dem Montageteil (6) und dem Halteteil (7) sind wenigstens zwei elastisch dehnbare Verbindungsbänder angeordnet, die in der Halteteil-Gebrauchsstellung zwischen dem Montageteil (6) und dem Halteteil (7) mit einer Zugspannung oberhalb eines Ladebodens (5) des Laderaums (2) aufgespannt sind. Die wenigstens zwei nebeneinanderliegenden Verbindungsbänder (9) sind mittels eines klammerartigen Verbindungsstegs (10) verbindbar, so dass dadurch wenigstens zwei Aufnahmefächer (12) mit durch die Verbindungsbänder (9) gebildete elastischen Wandbereichen ausbildbar sind.

## Beschreibung

Die Erfindung betrifft eine Haltevorrichtung für Gegenstände in einem Laderaum eines Kraftfahrzeuges als Ladegutsicherungseinrichtung nach dem Oberbegriff des Anspruchs 1.

Eine aus der EP 0 737 601 B1 bekannte, gattungsgemäße Haltevorrichtung für Gegenstände in einem Laderaum eines Kraftfahrzeuges als Ladegutsicherungseinrichtung weist ein ortsfest im Laderaum angeordnetes Montageteil auf. Zudem ist wenigstens ein Halteteil umfasst, das zwischen einer Halteteil-Nichtgebrauchsstellung und wenigstens einer Halteteil-Gebrauchsstellung verlagerbar ist.

Konkret ist das Montageteil in einem heckseitig angeordneten Laderaum des Kraftfahrzeuges in Fahrzeuglängsrichtung gesehen vorne angeordnet und mittels einem scherengitterartigen Mechanismus mit dem Halteteil verbunden. Durch den scherengitterartigen Mechanismus kann das Halteteil zwischen der Halteteil-Nichtgebrauchsstellung und der Halteteil-Gebrauchsstellung verlagert werden. Im Laderaum abgestellte Gegenstände können durch die Verlagerung des Halteteils in Richtung hinterer Ladekante so zwischen der Ladekante und dem Halteteil verklemmt werden, dass ein rutschfreier Transport dieser Gegenstände möglich ist. Das Halteteil kann dabei durch Arretiermittel festgelegt werden.

Aus der EP 1 314 610 A2 ist eine weitere Haltevorrichtung für Gegenstände in einem Laderaum bekannt. Dabei kann ein Halteteil in Fahrzeugquerrichtung ausgerichtet im Laderaum montiert werden, wobei das Halteteil in zugeordneten an den Seitenwänden des Laderaums ausgebildeten Rasteinrichtungen verrastet ist. Zwischen der Ladekante des Laderaums und dem in Fahrzeugquerrichtung ausgerichteten und somit parallel zur Ladekante verlaufenden Halteteil können in Fahrzeuglängsrichtung verlaufende Zwischenteile angeordnet werden, so dass dadurch eine Mehrzahl von Aufnahmefächern gebildet ist, in die Gegenstände eingestellt werden können. Sowohl durch das Halteteil als auch durch die Zwischenwände sind feste Wandbereiche für die Aufnahmefächer gebildet.

In der DE 101 34 887 A1 ist eine Haltevorrichtung gezeigt, bei der im Ladeboden jeweils in seitlichen Randbereichen je eine Schiene integriert ist, in die Befestigungselemente eingesetzt und entlang den Schienen verschoben werden können. In Abhängigkeit des zu haltenden Gegenstandes können auf die Befestigungselemente unterschiedlich ausgebildete Aufsatzelemente aufgesetzt werden, die über Netze oder Trennbretter verbunden werden können, so dass dadurch der Laderaum in eine Mehrzahl kleinerer Aufnahmefächer unterteilt ist.

Aufgabe der Erfindung ist es, eine alternative Haltevorrichtung für Gegenstände in einem Laderaum eines Kraftfahrzeuges als Ladegutsicherungseinrichtung zu schaffen, bei der mit einfachen Mitteln eine funktionssichere Halterung von Gegenständen im Laderaum möglich ist.

Diese Aufgabe wird mit den Merkmalen des Anspruchs 1 gelöst.

Gemäß Anspruch 1 ist das Halteteil in der Halteteil-Nichtgebrauchsstellung wenigstens bereichsweise direkt benachbart zum Montageteil anordenbar. In der Halteteil-Gebrauchsstellung ist das Halteteil beabstandet zum Montageteil anordenbar. Zwischen dem Montageteil und dem Halteteil sind wenigstens zwei elastisch dehnbare Verbindungsbänder angeordnet. Dabei sind in der Halteteil-Nichtgebrauchsstellung die Verbindungsbänder zwischen dem Montageteil und dem Halteteil aufgenommen und in der Halteteil-Gebrauchsstellung sind die Verbindungsbänder zwischen dem Montageteil und dem Halteteil mit einer Zugspannung oberhalb eines Ladebodens des Laderaums aufgespannt. Die wenigstens zwei nebeneinander liegenden Verbindungsbänder sind in wenigstens einem Verbindungsbereich mittels eines Verbindungsstegs verbindbar dergestalt, dass durch den wenigstens einen Verbindungsbereich wenigstens zwei Aufnahmefächer mit durch die Verbindungsbänder gebildeten elastischen Wandbereichen ausbildbar sind.

Vorteilhaft bei dieser Haltevorrichtung ist, dass durch wenige und einfache Bauteile, nämlich das Montageteil, das Halteteil und die Verbindungsbänder, Aufnahmefächer für Gegenstände geschaffen sind, die sich aufgrund der elastischen Dehnbarkeit der Verbindungsbänder flexibel an den jeweiligen Gegenstand anpassen können. Durch den oder die Verbindungsstege wird eine Unterteilung des zwischen dem Montageteil, dem Halteteil und durch die Verbindungsbänder ausgebildeten Aufnahmefächer durchgeführt. Ein Verbindungssteg kann durch ein Klammerteil durch Zusammennähen, durch Druckknöpfe oder andere bekannte Verbindungstechniken unlösbar oder lösbar hergestellt sein, wodurch ggf. in Abhängigkeit von der Größe des zu haltenden Gegenstandes eine Verbindung zwischen den Verbindungsbändern im Verbindungsbereich hergestellt werden kann. In den durch das Montageteil, das Halteteil und die Verbindungsbänder begrenzten Aufnahmefächer ist der zu haltende Gegenstand gegen, insbesondere während des Fahrbetriebs, auf diesen einwirkende Kräfte in Fahrzeuglängsrichtung und/oder Fahrzeugquerrichtung gesichert. Dadurch dass die Verbindungsbänder oberhalb des Ladebodens des Laderaums in der Halteteil-Gebrauchsstellung aufgespannt sind, können auch Gegenstände mit einer größeren Aufstandsfläche als die Fläche der gebildeten Aufnahmefächer ist, problemlos eingestellt werden, da durch die Elastizität der Verbindungsbänder diese relativ gegenüber dem Ladeboden verlagert werden können und somit der Gegenstand elastisch umschlossen und in gewisser Weise durch die Verbindungsbänder eingeklemmt wird. Werden beispielsweise gewichtsmäßig schwerere Gegenstände mit der Haltevorrichtung gehalten, so können diese direkt benachbart zum Montageteil und/oder zum Halteteil angeordnet werden, so dass durch das Montageteil und/oder das Halteteil eine feste Abstützung für eine zusätzlich erhöhte Funktionssicherheit der Halterung der Haltevorrichtung gegeben ist. Durch das elastische Umschließen der Gegenstände wird auch eine Ladegutsicherung in Vertikalrichtung erreicht.

In einer besonders bevorzugten Weiterbildung gemäß Anspruch 2 ist wenigstens ein klammerartiger Verbindungssteg entlang der Verbindungsbänder verschiebbar. Somit ist auf einfache Weise eine flächenmäßige Veränderung der Aufnahmefächer möglich, wobei dabei ein zu haltender Gegenstand durch die elastischen Verbindungsbänder gezielt elastisch umschließbar und einklemmbar ist. Ist ein Gegenstand in ein Aufnahmefach eingestellt, kann durch Verschieben des Verbindungssteges dieser so zwischen die Verbindungsbänder eingeklemmt werden, dass er funktionssicher gehalten ist. Aufgrund der Elastizität der Verbindungsbänder ist der Gegenstand auch bei entsprechender Krafteinwirkung in gewisser Weise gefedert gelagert, so dass eine Beschädigung des Gegenstandes oder auch des Laderaums während des Fahrbetriebes weitgehend ausgeschlossen ist. Der klammerartige Verbindungssteg kann ggf. so ausgeführt sein, dass er einfach von den Verbindungsbändern entfernt werden kann und nur im Bedarfsfall, beispielsweise beim Transport eines flächenmäßig kleinen Gegenstandes, entsprechend an den Verbindungsbändern angebracht wird für eine entsprechend dem Gegenstand angepasste Größe des gebildeten Aufnahmefaches.

In einer nächsten Ausführungsform gemäß Anspruch 3 können die wenigstens zwei Verbindungsbänder durch elastisch dehnbare Flachbänder mit im montierten Zustand vertikal ausgerichteten Flachbandbreiten gebildet sein. Bei einer entsprechend breiten Ausführung der Flachbänder bilden diese entsprechend hohe Wandbereiche aus, so dass dadurch eine funktionssichere, seitliche Abstützung für Gegenstände durch die Flachbänder geschaffen ist. Grundsätzlich können die Verbindungsbänder beispielsweise auch aus einer Mehrzahl von parallel verlaufenden und im Querschnitt gesehen runden Gummibändern gebildet sein.

In einer vorteilhaften Weiterbildung gemäß Anspruch 4 kann der wenigstens eine klammerartige Verbindungssteg die vertikal ausgerichteten Flachbänder umgreifen. Dadurch ist eine funktionssichere Verschiebung des Verbindungssteges entlang der Flachbänder gewährleistet. Zugleich wird durch das Umgreifen des Verbindungssteges um die Flachbänder herum ein definierter Abstand der Flachbänder zum Ladeboden hin geschaffen, so dass die Flachbänder funktionssicher oberhalb des Ladebodens gehalten sind und entsprechend einfach beispielsweise beim Einstellen eines Gegenstandes in ein Aufnahmefach verschoben werden können.

In einer nächsten Ausgestaltung können gemäß Anspruch 5 die wenigstens zwei Verbindungsbänder aus einem Textil-/Elastomermaterial hergestellt sein. Dadurch ist für die Verbindungsbänder eine hochwertige Anmutung geschaffen und zudem ist sichergestellt, dass von diesen Verbindungsbändern umschlossene Gegenstände kratzfrei umschlossen sind. Grundsätzlich kann jedes elastisch dehnbare Material für die Verbindungsbänder verwendet werden.

Gemäß einer Weiterbildung nach Anspruch 6 können mehrere Verbindungsbänder voneinander beabstandet nebeneinander zwischen dem Montageteil und dem Halteteil angeordnet sein. In einer bevorzugten Ausführungsform sind dabei sechs Verbindungsbänder, die in gleichen Abstand voneinander am Montageteil bzw. am Halteteil angeordnet sind, vorgesehen. Somit ist eine Vielzahl von Aufnahmefächern geschaffen, die aufgrund der Verschiebbarkeit der Verbindungsstege, mit denen jeweils benachbart angeordnete Verbindungsbänder im Verbindungsbereich verbunden sind, variabel, jeweils auf die Größe des zu haltenden Gegenstandes abgestimmt, eingestellt werden können.

In einer konkreten Ausführungsform gemäß Anspruch 7 können das Montageteil und/oder das Halteteil durch schalenförmige Haltebleche gebildet sein mit aufeinanderzugerichteten, der vertikalen Abmessung der Verbindungsbänder angepassten Schalenmulden zur Aufnahme der Verbindungsbänder in der Halteteil-Nichtgebrauchsstellung. Somit sind die Verbindungsbänder in der Halteteil-Nichtgebrauchsstellung sicher zwischen dem Montageteil und dem Halteteil in der entsprechenden Schalenmulde aufgenommen, so dass diese dadurch einerseits verdeckt aufgeräumt sind und andererseits beim Beladen des Laderaums ohne Verwendung der erfindungsgemäßen Haltevorrichtung keine Behinderung darstellen.

Gemäß einer weiteren konkreten Ausführungsform kann gemäß Anspruch 8 in einem heckseitigen Laderaum im montierten Zustand der Haltevorrichtung das Montageteil in Fahrzeuglängsrichtung gesehen vorne und das Halteteil in der Halteteil-Gebrauchsstellung hinten angeordnet sein, so dass die Verbindungsbänder in der Halteteil-Gebrauchsstellung in Fahrzeuglängsrichtung gespannt sind. Grundsätzlich besteht auch die Möglichkeit, dass die Haltevorrichtung so im Laderaum angeordnet ist, dass in der Halteteil-Gebrauchsstellung die Verbindungsbänder in Fahrzeugquerrichtung verlaufen.

In einer Weiterbildung gemäß Anspruch 9 kann im montierten Zustand der Haltevorrichtung die Abmessung des Montageteils und/oder des Halteteils in Fahrzeugquerrichtung gesehen in etwa der Breite des Laderaums entsprechen. Dadurch ist der maximal zur Verfügung stehende Platz im Laderaum genutzt, wobei darauf zu achten ist, dass die Verlagerung des Halteteils zwischen der Halteteil-Nichtgebrauchsstellung und der Halteteil-Gebrauchsstellung möglich ist.

Für eine entsprechende komplette Nutzung des zur Verfügung stehenden Laderaums in Fahrzeuglängsrichtung gesehen können die Verbindungsbänder gemäß Anspruch 10 im gespannten Zustand bei in der Halteteil-Gebrauchsstellung befindlichen Halteteil in etwa über die gesamte Länge des Laderaums gespannt sein. Grundsätzlich kann die Haltevorrichtung unabhängig von der Einbauorientierung jeweils so ausgelegt sein, dass der komplette zur Verfügung stehende Laderaum genutzt wird.

In einer weiteren Ausführungsform gemäß Anspruch 11 kann das Halteteil in der Halteteil-Nichtgebrauchsstellung am Montageteil lösbar verrastbar sein. Somit ist das Halteteil bei Nichtverwendung der Haltevorrichtung funktionssicher am Montageteil gehalten und kann für einen entsprechenden Einsatz der Haltevorrichtung einfach von diesem gelöst werden. Grundsätzlich können auch zusätzlich oder anstelle der Verrastung Mittel vorgesehen sein, wie z. B. Sicherungsbänder, durch die das Halteteil in der Halteteil-Nichtgebrauchsstellung am Montageteil gehalten wird.

In einer nächsten Ausgestaltung kann nach Anspruch 12 am Halteteil wenigstens eine Handhabe vorgesehen sein, mittels der eine Verlagerung des Halteteils zwischen der Halteteil-Nichtgebrauchsstellung und der Halteteil-Gebrauchsstellung durchführbar ist. In einer bevorzugten Ausführungsform ist die Handhabe dabei als Griffteil ausgebildet, das am Halteteil angeordnet ist. Für eine einfache und ergonomisch günstige Verlagerungsmöglichkeit des Halteteils können am Halteteil auch zwei voneinander beabstandete Griffteile vorgesehen sein.

In einer bevorzugten Weiterbildung kann gemäß Anspruch 13 das Montageteil lösbar im Laderaum angeordnet sein. Somit kann die Haltevorrichtung aus dem Laderaum herausgenommen werden. Soll beispielsweise eine im Kraftfahrzeug vorhandene Durchladevorrichtung vom Laderaum in den Fahrzeuginnenraum genutzt werden, so kann das Halteteil von der Halteteil-Gebrauchsstellung in die Halteteil-Nichtgebrauchsstellung verlagert werden und anschließend kann das Montageteil aus dem Laderaum gelöst werden, so dass die gesamte Haltevorrichtung aus dem Laderaum herausgenommen werden kann.

In einer konkreten Ausführungsform gemäß Anspruch 14 kann das Montageteil und/oder das Halteteil in der Halteteil-Gebrauchsstellung an im Laderaum vorhandenen Verzurrösen anordenbar sein. Somit werden im Laderaum vorhandene Befestigungsmöglichkeiten für die Befestigung der Haltevorrichtung verwendet, so dass die Haltevorrichtung einfach und schnell auch in unterschiedliche Fahrzeugtypen eingebaut werden kann.

Anhand einer Zeichnung wird ein Ausführungsbeispiel der Erfindung näher erläutert.

### Es zeigen:

- Fig. 1: eine schematische, perspektivische Ansicht eines Laderaums mit einer Haltevorrichtung, wobei ein Halteteil in der Halteteil-Nichtgebrauchsstellung dargestellt ist,
- Fig. 2: eine schematische, perspektivische Ansicht des Laderaums mit der Haltevorrichtung, wobei das Halteteil in der Halteteil-Gebrauchsstellung dargestellt ist,
- Fig. 3: eine schematische, perspektivische Ansicht des Laderaumes mit von der Haltevorrichtung gehaltenen Gegenständen, und
- Fig. 4: eine schematische, perspektivische Detailansicht mit Blickrichtung des Pfeiles A von Fig. 2.

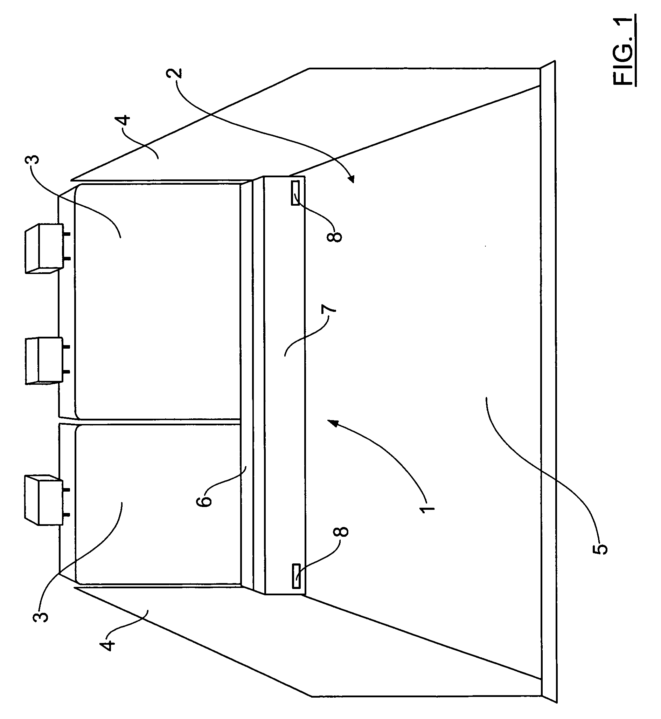

In Fig. 1 ist in einer schematischen, perspektivischen Ansicht eine Haltevorrichtung 1 für Gegenstände in einem Laderaum 2 eines Kraftfahrzeuges dargestellt. Der Laderaum 2 ist in Fahrzeuglängsrichtung gesehen vorne durch Lehnen 3 einer Rücksitzbank und seitlich durch entsprechende Laderaumverkleidungen 4 begrenzt. Nach unten ist der Laderaum 2 durch einen Ladeboden 5 abgeschlossen.

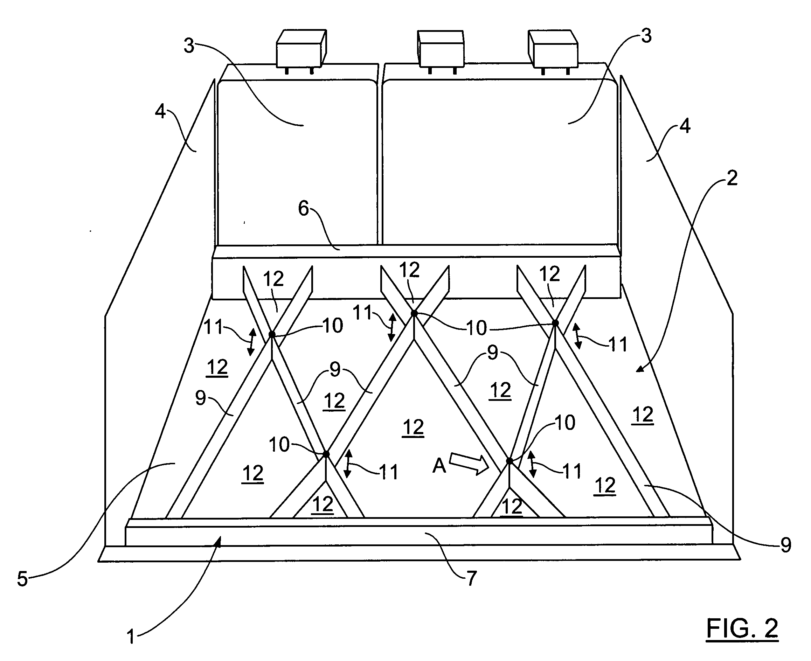

Die Haltevorrichtung 1 umfasst ein Montageteil 6 und ein Halteteil 7. Das Halteteil 7 ist zwischen einer Halteteil-Nichtgebrauchsstellung, die in Fig. 1 dargestellt ist, und einer Halteteil-Gebrauchsstellung, die in Fig. 2 dargestellt ist, verlagerbar. Das Montageteil 6 ist ortsfest hinter den Lehnen 3 am Ladeboden 5 angeordnet. Sowohl das Montageteil 6 als auch das in der Halteteil-Gebrauchsstellung befindliche Halteteil 7 können am im Laderaum 2 vorhandenen Verzurrösen (hier nicht mit dargestellt) befestigt werden. Für eine einfache Verlagerung des Halteteils 7 sind an diesem Griffteile 8 vorgesehen. Wird die Haltevorrichtung 1 insgesamt nicht benötigt, so kann diese einfach aus dem Laderaum 2 herausgenommen werden, wobei dabei das Halteteil 7 am Montageteil 6 verrastet ist.

Bei der in Fig. 2 gezeigten Halteteil-Gebrauchsstellung sind die zwischen dem Montageteil 6 und dem Halteteil 7 angeordneten Flachbänder 9 als Verbindungsbänder zu erkennen. Die sechs Flachbänder 9 sind jeweils am Montageteil 6 und am Halteteil 7 mit gleichen Abständen voneinander nebeneinander befestigt, wobei die Flachbänder 9 bezüglich ihrer Flachbandbreite vertikal ausgerichtet angeordnet sind. Jeweils zwischen zwei benachbart liegenden Flachbändern 9 ist ein Verbindungssteg 10 angeordnet, der entlang der Flachbänder 9 verschoben werden kann. Dies ist mit den Pfeilen 11 in Fig. 2 eingezeichnet. Dadurch sind eine Vielzahl von durch das Montageteil 6, das Halteteil 7 und die Flachbänder 9 gebildete Aufnahmefächer 12 ausgebildet. Grundsätzlich ist es auch denkbar, die Haltevorrichtung 1 ohne die Verbindungsstege 10 zu nutzen, wobei dabei die Flachbänder 9 in Fahrzeuglängsrichtung in etwa parallel verlaufend ausgerichtet sind, so dass bei der im Ausführungsbeispiel gezeigten Variante fünf längliche Aufnahmefächer zwischen den Flachbändern 9 gebildet sind.

In der Halteteil-Nichtgebrauchsstellung (sh. Fig. 1) sind die Flachbänder 9 zwischen dem Montageteil 6 und dem Halteteil 7 aufgenommen, wobei das Montageteil 6 und das Halteteil 7 dabei als schalenförmige Haltebleche ausgebildet sein können mit aufeinander zu gerichteten Schalenmulden, in denen die Flachbänder 9 aufgenommen sind. Die Schalenmulden sind dabei der Flachbandbreite entsprechend angepasst, so dass eine funktionssichere und vollständige Aufnahme der Flachbänder 9 gewährleistet ist. In der Halteteil-Gebrauchsstellung (sh. Fig. 2) sind die Flachbänder 9 zwischen dem Montageteil 6 und dem Halteteil 7 mit einer Zugspannung oberhalb des Ladebodens 5 aufgespannt. Das Montageteil 6 und das Halteteil 7 erstrecken sich dabei im wesentlichen über die gesamte Breite des Laderaums 2 und in der Halteteil-Gebrauchsstellung sind die Flachbänder 9 in etwa über die gesamte Länge des Laderaums 2 aufgespannt, so dass insgesamt der gesamte zur Verfügung stehende Ladeboden 5 zur Halterung von Gegenständen mit der Haltevorrichtung 1 genutzt werden kann.

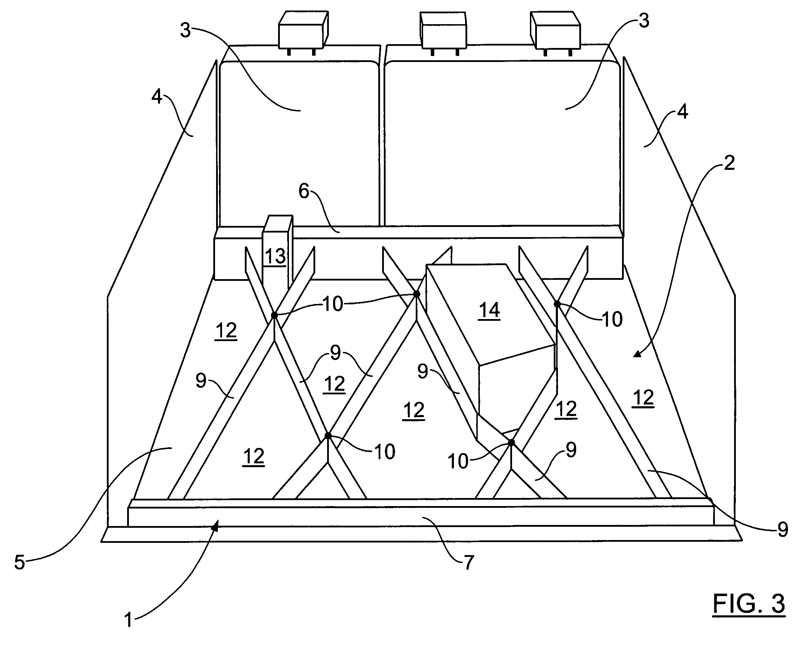

In Fig. 3 ist ebenfalls die schematische, perspektivische Ansicht des Laderaums 2 mit in Halteteil-Gebrauchsstellung befindlichem Halteteil 7 dargestellt, wobei zwei Gegenstände 13 und 14 in entsprechende Aufnahmefächer 12 der Haltevorrichtung 1 eingestellt sind. Aufgrund einer entsprechend breiten Ausführung der Flachbänder 9 können auch höhere Gegenstände 13 funktionssicher in Aufnahmefächern 12 der Haltevorrichtung 1 gehalten werden. Am Gegenstand 14 ist zu erkennen, dass die durch die Flachbänder 9 ausgebildeten Wandbereiche der Aufnahmefächer 12 elastisch sind und somit den zu haltenden Gegenstand 14 elastisch umschließen und einklemmen. Durch die Haltevorrichtung 1 werden die Gegenstände 13 und 14 gegenüber insbesondere während eines Fahrbetriebs auftretenden Krafteinwirkungen in Fahrzeugquerrichtung und/oder Fahrzeuglängsrichtung gesichert. Durch die Anordnung der Flachbänder 9 oberhalb des Ladebodens 5 können diese beispielsweise beim Einstellen eines Gegenstandes 14 einfach gegenüber dem Ladeboden 5 verschoben werden, so dass dadurch sichergestellt ist, dass der Gegenstand 14 funktionssicher elastisch umschlossen und entsprechend eingeklemmt ist. Durch Verschiebung der Verbindungsstege 10 kann eine flächenmäßige Veränderung der Aufnahmefächer 12 durchgeführt werden, so dass nach Einstellen der Gegenstände 13 und 14 in die entsprechenden Aufnahmefächer 12 die jeweiligen Verbindungsstege 10 so verschoben werden können, dass die Gegenstände 13 und 14 funktionssicher in dem entsprechenden Aufnahmefach 12 gehalten sind.

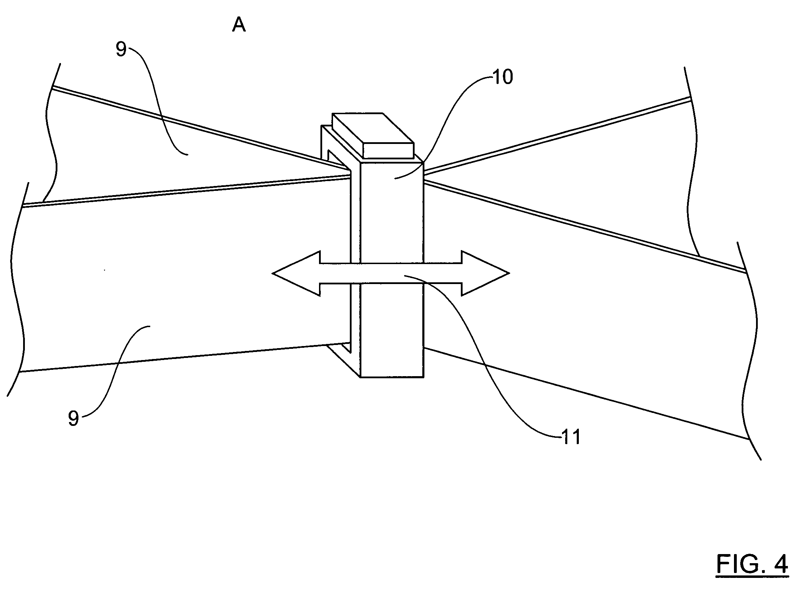

In Fig. 4 ist schematisch und perspektivisch eine Detailansicht mit Blickrichtung des Pfeiles A von Fig. 2 dargestellt. Dabei ist zu erkennen, dass der Verbindungssteg 10 das Flachband 9 vollständig umgreift, so dass eine funktionssichere Verschiebung des Verbindungssteges 10 entlang des Flachbandes 9 möglich ist. Zudem ist durch den Verbindungssteg 10 eine Art Abstandshalter zum Ladeboden (hier nicht mit dargestellt) gegeben, so dass dadurch die Anordnung der Flachbänder 9 oberhalb des Ladebodens 5 sichergestellt ist. Auch hier ist die Verschiebemöglichkeit des Verbindungssteges 10 mit dem Pfeil 11 eingezeichnet. Grundsätzlich ist es auch denkbar, den Verbindungssteg 10 beispielsweise zweiteilig zu gestalten, so dass dieser bei Nichtgebrauch einfach von den Flachbändern 9 entfernt werden kann, so dass ein Gegenstand zwischen zwei dann in etwa parallel verlaufenden Flachbändern 9 eingestellt werden kann.

Insgesamt ist durch die Haltevorrichtung 1 eine einfache und funktionssichere Möglichkeit geschaffen, Gegenstände 13 und 14 gegen Verrutschen im Laderaum 2 zu sichern. Durch die Möglichkeit der Verschiebung der Verbindungsstege 10 entlang der Flachbänder 9 ist eine entsprechende Variabilität der Haltevorrichtung 1 gegeben, so dass unterschiedlich große Gegenstände 13 und 14 bei einer entsprechenden Verschiebung der Verbindungsstege 10 funktionssicher elastisch umschlossen und eingeklemmt gehalten sind. Wird die gesamte Haltevorrichtung 1, beispielsweise für die Nutzung der Durchladevorrichtung (hier nicht mit dargestellt) des Kraftfahrzeuges, nicht benötigt, so kann das Halteteil 7 in die Halteteil-Nichtgebrauchsstellung am Montageteil verrastet werden, wobei dabei die Flachbänder 9 zwischen dem Halteteil 7 und dem Montageteil 6 aufgenommen sind, und anschließend die Haltevorrichtung 1 komplett als ein Bauteil aus dem Laderaum 2 herausgenommen werden kann.

## Patentansprüche

1. Haltevorrichtung für Gegenstände in einem Laderaum eines Kraftfahrzeuges, mit einem ortsfest im Laderaum angeordneten Montageteil, und mit wenigstens einem Halteteil, das zwischen einer Halteteil-Nichtgebrauchsstellung und wenigstens einer Halteteil-Gebrauchsstellung verlagerbar ist,
**dadurch gekennzeichnet,**
**dass** das Halteteil (7) in der Halteteil-Nichtgebrauchsstellung wenigstens bereichsweise direkt benachbart zum Montageteil (6) anordenbar ist,
**dass** das Halteteil (7) in der Halteteil-Gebrauchsstellung beabstandet zum Montageteil (6) anordenbar ist,
**dass** zwischen dem Montageteil (6) und dem Halteteil (7) wenigstens zwei elastisch dehnbare Verbindungsbänder (9) angeordnet sind dergestalt, dass in der Halteteil-Nichtgebrauchsstellung die Verbindungsbänder (9) zwischen dem Montageteil (6) und dem Halteteil (7), vorzugsweise verdeckt, aufgenommen sind und dass in der Halteteil-Gebrauchsstellung die Verbindungsbänder (9) zwischen dem Montageteil (6) und dem Halteteil (7) mit einer Zugspannung oberhalb eines Ladebodens (5) des Laderaums (2) aufgespannt sind, und
**dass** die wenigstens zwei nebeneinanderliegenden Verbindungsbänder (9) in wenigstens einem Verbindungsbereich mittels einem Verbindungssteg (10) verbindbar sind dergestalt, dass durch den wenigstens einen Verbindungsbereich wenigstens zwei Aufnahmefächer (12) mit durch die Verbindungsbänder (9) gebildete elastischen Wandbereichen ausbildbar sind.

2. Haltevorrichtung nach Anspruch 1, **dadurch gekennzeichnet, dass** der wenigstens ein klammerartiger Verbindungssteg (10) entlang der Verbindungsbänder (9) verschiebbar ist für eine flächenmäßige Veränderung der Aufnahmefächer (12), wobei ein zu haltender Gegenstand durch die elastischen Verbindungsbänder (9) elastisch umschließbar und einklemmbar ist.

3. Haltevorrichtung nach Anspruch 1 oder 2, **dadurch gekennzeichnet, dass** die wenigstens zwei Verbindungsbänder durch elastisch dehnbare Flachbänder (9) mit im montierten Zustand vertikal ausgerichteten Flachbandbreiten gebildet sind.

4. Haltevorrichtung nach Anspruch 3, **dadurch gekennzeichnet, dass** der wenigstens eine klammerartige Verbindungssteg (10) die vertikal ausgerichteten Flachbänder (9) umgreift.

5. Haltevorrichtung nach einem der Ansprüche 1 bis 4, **dadurch gekennzeichnet, dass** die wenigstens zwei Verbindungsbänder (9) aus einem Textil-/Elastomermaterial hergestellt sind.

6. Haltevorrichtung nach einem der Ansprüche 1 bis 5, **dadurch gekennzeichnet, dass** mehrere Verbindungsbänder (9), vorzugsweise sechs, voneinander beabstandet, vorzugsweise im gleichen Abstand, nebeneinander zwischen dem Montageteil (6) und dem Halteteil (7) angeordnet sind.

7. Haltevorrichtung nach einem der Ansprüche 1 bis 6, **dadurch gekennzeichnet, dass** das Montageteil (6) und/oder das Halteteil (7) durch schalenförmige Haltebleche gebildet sind mit aufeinander zugerichteten, der vertikalen Abmessung der Verbindungsbänder (9) angepassten Schalenmulden zur Aufnahme der Verbindungsbänder (9) in der Halteteil-Nichtgebrauchsstellung.

8. Haltevorrichtung nach einem der Ansprüche 1 bis 7, **dadurch gekennzeichnet, dass** in einem heckseitigen Laderaum (2) im montierten Zustand der Haltevorrichtung (1) das Montageteil (6) in Fahrzeuglängsrichtung gesehen vorne und das Halteteil (7) in der Halteteil-Gebrauchsstellung hinten angeordnet ist, so dass die Verbindungsbänder (9) in der Halteteil-Gebrauchsstellung in Fahrzeuglängsrichtung gespannt sind.

9. Haltevorrichtung nach Anspruch 8, **dadurch gekennzeichnet, dass** im montierten Zustand der Haltevorrichtung (1) die Abmessung des Montageteils (6) und/oder des Halteteils (7) in Fahrzeugquerrichtung gesehen in etwa der Breite des Laderaums (2) entsprechen.

10. Haltevorrichtung nach Anspruch 8 oder 9, **dadurch gekennzeichnet, dass** die Verbindungsbänder (9) im gespannten Zustand bei in der Halteteil-Gebrauchsstellung befindlichem Halteteil (7) in etwa über die gesamte Länge des Laderaums (2) aufgespannt sind.

11. Haltevorrichtung nach einem der Ansprüche 1 bis 10, **dadurch gekennzeichnet, dass** das Halteteil (7) in der Halteteil-Nichtgebrauchsstellung am Montageteil (6) lösbar verrastbar ist.

12. Haltevorrichtung nach einem der Ansprüche 1 bis 11, **dadurch gekennzeichnet, dass** am Halteteil (7) wenigstens eine Handhabe, vorzugsweise ein Griffteil (8), vorgesehen ist, mittels der eine Verlagerung des Halteteils (7) zwischen der Halteteil-Nichtgebrauchsstellung und der Halteteil-Gebrauchsstellung durchführbar ist.

13. Haltevorrichtung nach einem der Ansprüche 1 bis 12, **dadurch gekennzeichnet, dass** das Montageteil (6) lösbar im Laderaum (2) angeordnet ist für eine Herausnahme der Haltevorrichtung (1) aus dem Laderaum (2).

14. Haltevorrichtung nach einem der Ansprüche 1 bis 13, **dadurch gekennzeichnet, dass** das Montageteil (6) und/oder das Halteteil (7) in der Halteteil-Gebrauchsstellung an im Laderaum (2) vorhandenen Verzurrösen befestigbar ist.
